(19) **Europäisches Patentamt / European Patent Office / Office européen des brevets**

(11) **EP 1 583 654 B1**

(12) **EUROPEAN PATENT SPECIFICATION**

(45) Date of publication and mention
of the grant of the patent:
**26.11.2008 Bulletin 2008/48**

(21) Application number: **03812331.1**

(22) Date of filing: **28.11.2003**

(51) Int Cl.:
**B29D 11/00** (2006.01)

(86) International application number:
**PCT/JP2003/015219**

(87) International publication number:
**WO 2004/050335 (17.06.2004 Gazette 2004/25)**

(54) **METHOD OF FABRICATING A PREFORM FOR PRODUCING PLASTIC OPTICAL COMPONENTS**

VERFAHREN ZUR HERSTELLUNG VON EINEM VORFORMLING ZUR HERSTELLUNG VON OPTISCHEN KUNSTSTOFFKOMPONENTEN

PROCEDE DE FABRICATION D'UNE PREFORME UTILISEE DANS LA PRODUCTION DE COMPOSANTS OPTIQUES EN PLASTIQUE

(84) Designated Contracting States:
**AT BE BG CH CY CZ DE DK EE ES FI FR GB GR HU IE IT LI LU MC NL PT RO SE SI SK TR**

(30) Priority: **29.11.2002 JP 2002348134**

(43) Date of publication of application:
**12.10.2005 Bulletin 2005/41**

(73) Proprietor: **FUJIFILM Corporation
Minato-ku
Tokyo (JP)**

(72) Inventors:
• **SHIROKURA, Yukio**
**Fujinomiya-shi, Shizuoka 418-8666 (JP)**
• **OGURA, Tohru**
**Fujinomiya-shi, Shizuoka 418-8666 (JP)**
• **TAKAHASHI, Hiroki**
**Fujinomiya-shi, Shizuoka 418-8666 (JP)**
• **MIYOSHI, Takahito**
**Fujinomiya-shi, Shizuoka 418-8666 (JP)**

(74) Representative: **Klunker . Schmitt-Nilson . Hirsch
Winzererstrasse 106
80797 München (DE)**

(56) References cited:
**WO-A-98/57204**

• **PATENT ABSTRACTS OF JAPAN vol. 0121, no. 00 (P-683), 2 April 1988 (1988-04-02) & JP 62 231904 A (BRIDGESTONE CORP), 12 October 1987 (1987-10-12)**
• **PATENT ABSTRACTS OF JAPAN vol. 1997, no. 04, 30 April 1997 (1997-04-30) & JP 8 338914 A (FURUKAWA ELECTRIC CO LTD:THE), 24 December 1996 (1996-12-24)**
• **PATENT ABSTRACTS OF JAPAN vol. 1996, no. 06, 28 June 1996 (1996-06-28) & JP 8 054521 A (NIPPON PETROCHEM CO LTD), 27 February 1996 (1996-02-27)**

**Description**

Technical Field

The present invention relates to a method of manufacturing a preform for plastic optical components.

Background Art

Plastic optical components possess the advantages of easiness in manufacture and processing and inexpensiveness over quartz-base optical components having the same configuration, and are applied to various fields such as optical fiber, optical lens and so forth more frequently in recent years. Among them, plastic optical fiber has an excellent flexibility, lightness in weight, workability, easiness in manufacturing large-diameter fiber as compared with quartz-base optical fiber, and inexpensiveness in the manufacture, although it is disadvantageous in having a slightly larger transmission loss as compared with quartz-base optical fiber. These characteristics come from the fact that the entire portion of the element fiber constituting the plastic fiber is made solely of plastic. The plastic optical fiber is therefore investigated for use in short-distance use in which the transmission loss of the fiber is negligible.

The plastic optical fiber comprises at least a core composed of an organic compound using a polymer as a matrix, and a shell composed of an organic compound having a refractive index different from that of the core portion (generally having a smaller refractive index). The core is referred to as "core portion" and the shell is referred to as "cladding portion" hereinafter in this specification. In particular, recent attention is attracted by a graded-index plastic optical fiber having a gradation of the refractive index along the direction from the center towards the peripheral portion because of its large transmission capacity. In one known method of manufacturing the graded-index plastic optical fiber, a base material for the optical fiber (referred to as "preform" hereinafter in this specification) is produced by the interfacial gel polymerization process, and the obtained preform is then stretched. In this manufacturing process, a polymerizable monomer such as methyl methacrylate (MMA) is first placed in a sufficiently-rigid polymerization reactor, and the monomer is allowed to polymerize while rotating the reactor, to thereby manufacture a hollow tube composed of a polymer of polymethacrylate (PMMA) or the like. The hollow tube is to constitute the cladding portion. Next, the monomer such as MMA as a source material for the core portion, a polymerization initiator, a chain transfer agent, a refractive index adjusting agent and so forth are supplied into the hollow portion of the hollow tube, and the mixture is subjected to the interfacial gel polymerization to thereby form the core portion. The core portion formed by the interfacial gel polymerization have a concentration gradation of the refractive index adjusting agent or the like contained therein, and this is causative of the gradation of the refractive index of the core portion. Thus-obtained preform is stretched under heating in an atmosphere at 180°C to 250°C or around, to thereby obtain a graded-index plastic optical fiber (see Japanese Patent No. 3332922, for example).

It is, however, known that bending of the plastic optical fiber results in leakage of light from the bent portion and thereby causes undesirable increase of the transmission loss since it is difficult to manufacture a graded-index plastic optical fiber having a sufficiently large difference in the refractive indices between the core portion and the cladding portion. As one solution for this problem, there is proposed a method of disposing a reflective layer composed of a transparent resin having a small refractive index (see Japanese Lain-Open Patent Publication No. 8-54521, for example). The reflective layer could certainly improve the bending loss of the plastic optical fiber, but further worsened the transmission loss.

For the purpose of improving the transmission loss of the plastic optical fiber, there are known methods of manufacturing a plastic optical fiber in which the cladding hollow tube thereof has an inner wall having a surface roughness adjusted within a specific range (Japanese Lain-Open Patent Publication No. 2000-352627, No. 8-338914 and No. 62-231904, for example). These inventions, however, relate to optical fiber of SI (step-index) type having no gradation in the refractive index, while placing a focus on the fact that average roughness of the inner wall of the cladding hollow tube could directly affect degradation in the performance due to light scattering at the core/cladding interface.

In contrast to this, graded-index optical fiber, so-called of GI type, improves its performance based on gradation in the refractive index, and is necessarily configured so as to have a stable distribution profile of the refractive index. Because the optical fiber is manufactured by once producing the preform and by stretching the preform, it has also been found that average roughness of the inner wall of the cladding portion of the preform could largely affect the core diameter after the stretching. In other words, in the GI-type plastic optical fiber, the average roughness of the inner wall of the cladding tube in the stage of the preform has largely affected the transmission performance, and has been causative of various problems.

WO 98/57204 A discloses a method of forming a gradient index plastic optical article. The method comprises the steps of forming a tube of polymeric material, filling the tube with a composition including a polymerizable core monomer and, then, polymerizing the core monomer.

Disclosure of Invention

The present invention is conceived after considering the aforementioned problems, and an object thereof resides in providing a method of stably manufacturing a preform for producing a plastic optical component, having a uniform index gradation profile in the longitudinal direction, and having only a less variation in the diameter of the core portion.

The present invention provides a method of manufacturing a preform for producing a plastic optical component having the features of claim 1.

Preferred embodiments are defined by the dependent claims.

It is to be understood that an expression of "having the refractive index continuously graded from the center towards the outer periphery" in this specification allows any gradation of the refractive index in a specific direction from the center towards the outer periphery. In an exemplary case where the region composing the core portion has a cylindrical form, only the refractive index graded from the center of the cylinder towards the outer periphery in the radial direction will suffice, and is not necessarily graded also in the longitudinal direction of the cylinder.

Brief Description of Drawings

FIG. 1 is a schematic sectional view showing an exemplary configuration of a melt extrusion molding machine based on the inner sizing system available for the fabrication of the optical member in the present invention;

FIG. 2 is a schematic drawing of an exemplary configuration of a manufacturing line of the melt extrusion molding machine based on the outer die vacuum suction system available for the fabrication of the optical member in the present invention; and

FIG. 3 is a perspective view of a molding die available for the fabrication of the optical member in the present invention.

Modes for Carrying Out the Invention

The present invention relates to a method of manufacturing a so-called, GI-type plastic optical component and a preform used therefor, and more specifically relates to a plastic optical component which comprises a graded-index core in which the refractive index continuously decreases from the center of the core to the outer radius, and a cladding portion having a refractive index smaller than that of center portion of the core by 0.03 or more.

The method of manufacturing a preform of this invention comprises a first step of fabricating a polymer hollow tube which is to be the cladding portion; and a second step of polymerizing a polymerizable composition in the hollow portion of the hollow tube to thereby form the core portion, where the hollow tube has an inner wall with an arithmetic mean roughness of less than 0.4 μm. The surface roughness of the inner wall of the hollow tube adjusted within the above-described range is successful in reducing light scattering at the core/cladding interface, and also in suppressing variation in the diameter of the core portion after being processed into the optical fiber by stretching or the like. This makes it possible to stably manufacture a high-performance plastic optical fiber having only a small transmission loss due to scattering, and less causative of degradation of the band characteristics due to degraded uniformity in the index gradation profile. The method of the present invention also contributes to improvement in the productivity, because the method can stably yield a preform having only a small variation in the diameter of the core portion, and having a uniform index gradation profile.

The next paragraphs will describe the first step for fabricating the polymer hollow tube which is to be the cladding portion.

The hollow tube fabricated in the first step has an inner wall with an arithmetic mean roughness of less than 0.4 μm, preferably 0.3 μm or less, and more preferably 0.25 μm or less. The lower limit thereof may ideally be 0 μm, which means completely roughness-free, but a substantial limit falls on 0.05 μm or around taking all available procedures into consideration. The arithmetic mean roughness mentioned in this specification is obtained by arithmetic-mean calculation of roughness based on observation of the inner wall with Color Laser 3D Profile Microscope VK-8500 manufactured by Keyence Corp. The geometry of the inner circumference of the resultant hollow tube is ideally a true circle, or is preferably as close as possible to true circle, having a roundness of 98% or above. The thickness of the hollow tube is preferably uniform in view of facilitating control of stretching conditions by measuring the outer diameter of the fiber obtained after stretching.

The arithmetic mean roughness of the inner wall of the hollow tube is adjustable within the above-described range by properly selecting the method of manufacturing the hollow tube, and for the case where the hollow tube is manufactured by molding, by properly selecting the molding conditions and the like. In an exemplary case where the hollow tube is manufactured by melt extrusion molding, it is necessary to keep the amount of extrusion of the molten resin or the drawing speed of the fabricated hollow tube constant, and to set the conditions so as to ensure a sufficiently uniform flow of the molten resin without causing residence or drifting over the range from a die to a lip. For the case where the fabrication is accomplished by rotary polymerization process as described later, it is essential to avoid decentering of the axis of rotation during the rotary polymerization. The hollow tube may impair the smoothness of the inner wall surface thereof due to dust accidentally entrained into the atmosphere or system, where any entrained dust in the air may undesirably produce projections on the surface, and any dust or debris of the resin adhered on the die may cause scratch during the extrusion. It is therefore preferable to expel any dust or other foreign matters from the atmosphere or system during the manufacturing process. There is also a risk of accidentally hurting the inner wall surface of the hollow tube during formation of the core portion due to some failure in the handling, and also this must be avoided.

The cladding portion, which is required for exhibiting total reflection of light is preferably formed using materials having a refractive index smaller than that of the core portion, being an amorphous material, desirable in the adhesiveness with the core portion, excellent in the toughness, and excellent in the moisture resistance and heat resistance. From this point of view, the cladding portion is preferably composed of a homopolymer or copolymer of a fluorine-containing monomer. The fluorine-containing monomer is preferably vinylidene fluoride, and the homopolymer or copolymer is preferably a fluorine-containing resin obtained by polymerizing one or more species of polymerizable monomers including 10% by mass or more of vinylidene fluoride.

The interface of the cladding portion with the core portion is preferably composed of a polymer having the same composition as the matrix of the core portion, in view of optical characteristics, mechanical characteristics and manufacturing stability. For example, interfacial state between the core portion and the cladding portion can be corrected by forming the outer core layer composed of a polymer having the same composition as the matrix of the core portion at the interface with the core portion (i.e., on the inner wall of the hollow tube). The outer core layer will be detailed later. It is of course possible to form the cladding layer per se using a polymer having the same composition as the matrix of the core portion, without forming the outer core layer.

For the case where the cladding portion is fabricated by molding a polymer by the melt extrusion molding process as described later, it is necessary to appropriately adjust the viscosity under melting of the polymer. The viscosity under melting can be discussed in correlation with molecular weight, where the weight-average molecular weight preferably falls within a range from 10,000 to 1,000,000, and more preferably 50,000 to 500,000.

It is also preferable to prevent as possible moisture from entering into the core portion, and it is therefore preferable to use a polymer having a small coefficient of water absorption as a source material for composing the cladding layer. More specifically, it is preferable to use a polymer having a coefficient of saturated water absorption (referred to as coefficient of water absorption, hereinafter) of less than 1.8% to fabricate the cladding portion. It is more preferable to fabricate the outer core layer using a polymer having a coefficient of water absorption of less than 1.5%, and more preferably less than 1.0%. The coefficient of water absorption (%) in the context of the present invention can be calculated after dipping a test piece into water at 23°C for a week, according to ASTM D570 test procedures.

The hollow tube may be fabricated while allowing the polymerization of the monomer to proceed at the same time, or may be fabricated after the polymer is once produced, and the obtained polymer is then molded based on melt extrusion molding or injection molding.

For the case where the cladding portion is fabricated in a form of the hollow tube while allowing the polymerization of the monomer to proceed, it is preferable to adopt a method typically disclosed in Japanese Patent No. 3332922, in which a source monomer for forming the cladding portion is charged into a cylindrical polymerization reactor, the reactor is closed at both ends, and the source monomer is allowed to polymerize while rotating the reactor (preferably so as to keep the axis of the cylinder horizontally). It is also allowable in this process to preliminarily raise the viscosity of the source monomer by pre-polymerization, and to carry out the normal polymerization, as described in Japanese Laid-Open Patent Publication No. 8-110419.

In the polymerization reactor, a polymerization initiator, a chain transfer agent and a stabilizer or the like may be placed thrown together with the monomer. Specific examples of the available monomers may be same as those described later in relation to the source materials for the core portion. The amount of addition thereof can appropriately be determined typically depending on the species of the monomer to be adopted. In general, the polymerization initiator is preferably added in an amount of 0.10 to 1.00% by mass of the polymerizable monomer, and more preferably 0.40 to 0.60% by mass of the polymerizable monomer. The chain transfer agent is preferably added in an amount of 0.10 to 0.40% by mass of the polymerizable monomer, and more preferably 0.15 to 0.30% by mass of the polymerizable monomer. Although the polymerization temperature and polymerization time may vary depending on the monomer to be adopted, the polymerization temperature is preferably adjusted to 60 to 90°C, and the polymerization time is preferably adjusted to 5 to 24 hours.

Upon completion of the rotary polymerization, it is also allowable to carry out annealing at a temperature higher than the polymerization temperature during the rotary polymerization for the purpose of completely reacting any residual monomers and polymerization initiator so as to avoid residues thereof. The clad hollow tube may indirectly be rotated as being inserted in a metal tube, or may directly be rotated.

The hollow tube composed of a polymer can be fabricated also by placing a pellet-formed or powdery resin (preferably fluorine-containing resin) into a cylindrical reactor, closing the reactor at both ends, heating the reactor up to a temperature higher than the melting point of the resin while keeping on rotating the reactor (preferably so as to keep the axis of the cylinder horizontally), to thereby allow the resin to melt. During this process, it is preferable to proceed the polymerization under an inert gas atmosphere by filling the polymerization reactor with nitrogen, argon or the like, or to preliminarily allow the resin to thoroughly dry, in order to avoid thermal oxidation and/or thermal decomposition of the molten resin.

For the case where the cladding portion is formed by melt extrusion of the polymer, it is also allowable to produce the polymer (preferably the aforementioned fluorine-containing resin), and then to obtain a structured component of a desired geometry (cylindrical form in this embodiment) by molding technique such as extrusion molding. The melt extrusion machines available herein are classified into two types, inner sizing die system and outer die vacuum suction system.

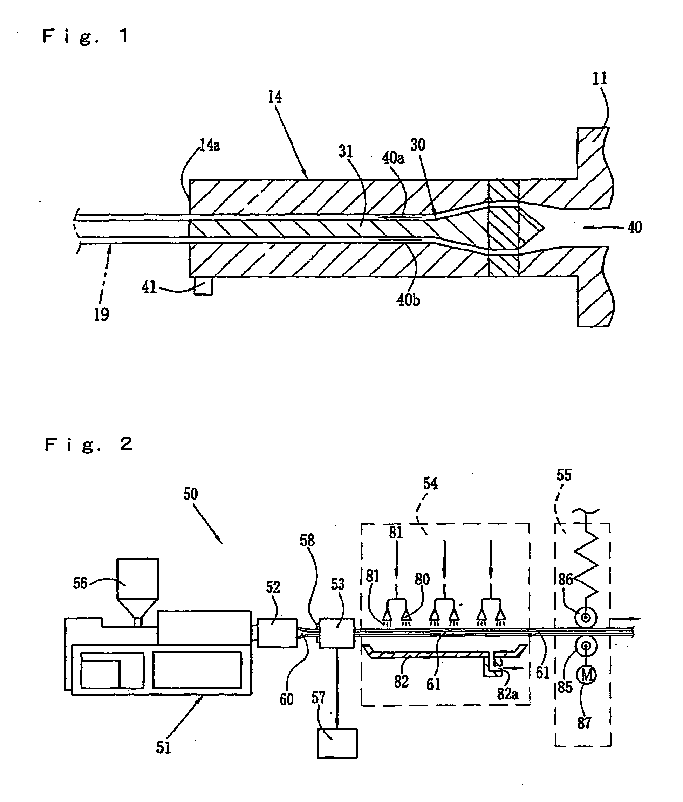

Outline of the inner sizing die system will be explained referring to FIG. 1 which is a schematic sectional view of an exemplary configuration of a melt extrusion molding machine based on the inner sizing die system.

A source polymer 40 for forming the cladding portion is extruded by a single screw extruder having a bent (not shown) out through a main unit 11 towards a die block 14. The die block 14 has a guide 30, inserted therein, for introducing the source polymer 40 into flow paths 40a, 40b. The source polymer 40 passes by the guide 30, flows through the flow paths 40a, 40b formed between the die block 14 and an inner rod 31, extruded out from the exit 14a of the die, to thereby forms a cylindrical hollow clad 19. The extrusion speed of the clad 19 is not specifically limited, where it is preferably set within a range from 1 cm/min to 100 cm/min in view of shape stability and productivity.

The die block 14 is preferably equipped with a heating device for heating the source polymer 40. In one possible configuration, one or two heating devices (device using steam, heat medium oil, electric heater, etc.) are disposed so as to surround the die block 14 along the direction of advancement of the source polymer 40. On the other hand, it is preferable to attach a temperature sensor 41 at the exit 14a of the die, and to use the temperature sensor 41 to control the temperature of the clad 19 at the exit 14a of the die. The temperature is preferably adjusted not higher than the glass transition point of the source polymer 40 in view of keeping a uniform geometry of the clad 19. The temperature of the clad 19 is also preferably adjusted not lower than 40°C in view of suppressing variation in the geometry due to abrupt temperature change. The temperature control for the clad 19 is attainable by attaching a cooling unit (device using liquid such as water, anti-freezing fluid or oil, or based on electronic cooling) to the die block 14, or by natural air cooling of the die block 14. For the case where the heating device is provided to the die block, the cooling unit is preferably disposed on the downstream side of the heating device.

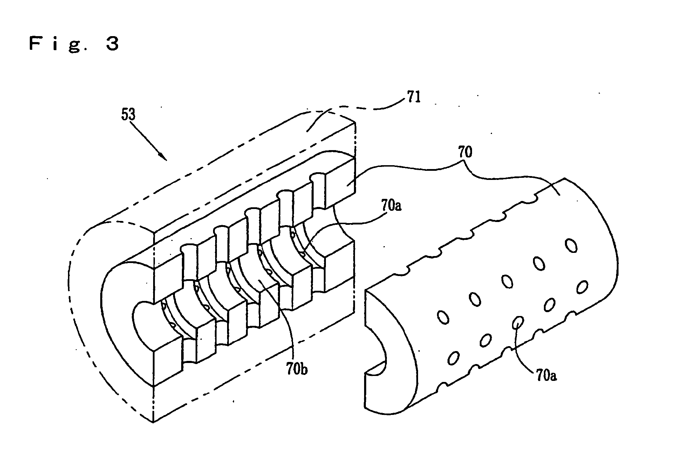

Next paragraphs will describe an outline of the forming process based on the outer die vacuum suction system referring to FIGs. 2 and 3, where the former shows an exemplary configuration of a manufacturing line of the melt extrusion molding machine based on the outer die vacuum suction system, and the latter is a perspective view of a molding die 53 available therefor.

A manufacturing line 50 shown in FIG. 2 comprises a melt extrusion machine 51, a pushing die 52, a molding die 53, a cooling unit 54 and drawing device 55. The source polymer charged through a pellet charge hopper (referred to as a hopper, hereinafter) 56 is melted inside the melt extrusion machine 51, extruded by the pushing die 52, and fed into the molding die 53. The extrusion speed S preferably satisfy a relation of $0.1 \leqq S$ (m/min) $\leqq 10$, more preferably $0.3 \leqq S$ (m/min) $\leqq 5.0$, and most preferably $0.4 \leqq S$ (m/min) $\leqq 1.0$, while not being limited to these ranges.

As shown in FIG. 3, the molding die 53 is equipped with a molding tube 70, through which the molten resin 60 is allowed to pass and molded to produce a cylindrical clad 61. The molding tube 70 has many suction holes 70a formed thereon, and allows the outer wall surface of the clad 61 to be pressed onto the molding surface (inner wall) 70b of the molding tube 70 when the reduced-pressure chamber 71 provided so as to surround the molding tube 70 is evacuated using a vacuum pump 57 (see FIG. 2), to thereby produce the clad 61 having a uniform thickness. The pressure inside the reduced-pressure chamber 71 is preferably adjusted within a range from 20 kPa to 50 kPa, while being not limiter thereto. It is preferable to attach a throat (outer diameter limiting member) 58 for limiting the outer diameter of the clad 61 at the entrance of the molding die 53. The clad 61 after being shaped by the molding die 53 is then sent to the cooling unit 54. The cooling unit 54 has a number of nozzles 80, from which cooling water 81 is ejected towards the clad 61 to thereby cool and solidify the clad 61. It is also allowable to collect the cooling water 81 on a receiving pan 82 and to discharge through a discharge port 82a. The clad 61 is drawn by the drawing device 55 out from the cooling unit 54. The drawing device 55 comprises a drive roller 85 and pressurizing roller 86. The drive roller 85 is connected to a motor 87, so as to make it possible to control the drawing speed of the clad 61. The pressurizing roller 86 disposed so as to oppose with the drive roller 85 while placing the clad 61 in between makes it possible to finely correct even a slight dislocation of the clad 61. By controlling the drawing speed of the drive roller 85 and the extrusion speed of the melt extrusion molding machine 51, or by finely adjusting displacement of the clad 61, the clad 61 can be fabricated with an excellent uniformity in the geometry thereof, especially in the thickness.

The cladding portion may be composed of a plurality of layers so as to have a variety of functions such as improved mechanical strength and flame retardancy. It is also preferable to fabricate the hollow tube so as to have an arithmetic mean roughness of the inner wall thereof within a predetermined range, and to cover the outer surface thereof with a fluorine-containing resin or the like.

The outer diameter of the resultant cladding portion preferably satisfies the relation of $D_1$ (mm) $\leqq 50$ in view of optical characteristics and productivity, and more preferably satisfies the relation of $10 \leqq D_1$ (mm) $\leqq 30$. The thickness t of the cladding portion can be determined arbitrarily in consideration of object and core/cladding ratio of the plastic optical fiber and others. For example, in a preform for a plastic optical fiber having an outer diameter of the cladding portion of 20 mm, the thickness t of the cladding portion preferably satisfies the relation of $0.2 \leqq t \text{ (mm)} \leqq 5$. The present invention is, however, by no means limited to the above-described ranges.

The process then advances to the second step, where it is also allowable to form an outer core portion on the inner wall of the hollow tube, before the polymerizable composition for forming the core portion is charged into the hollow portion of the hollow tube. The outer core layer is provided on the inner wall of the cladding portion for the purpose of modifying interfacial conditions between the cladding portion and the core portion, or for the purpose of facilitating the polymerization when the core portion is formed by block polymerization. The outer core layer formed on the inner wall of the cladding portion necessarily has an arithmetic mean roughness of the inner surface thereof of less than 0.4 $\mu$m.

It is required for the outer core layer, considering its function, to have an excellent compatibility with the polymer composing the core portion so as not to induce interfacial mismatching during the block polymerization. As descried in the above, the outer core layer is preferably composed of a polymer having the same composition as the matrix of the core portion. It is also preferable to use a polymer having a small coefficient of water absorption in view of preventing water from coming into the core portion, where a preferable range for the coefficient of water absorption is similar to that for the cladding portion. For the case where the outer core layer is formed by the melt extrusion process, the molecular weight of the polymer to be adopted necessarily resides in a range suitable for the melt extrusion process, where a preferable range is similar to that described in the above.

The outer core layer can be fabricated similarly to as described for the cladding portion. In one possible process, the cladding portion can be fabricated simultaneously with the hollow tube by co-extrusion in the melt extrusion molding process for the cladding portion. After the hollow tube, which is to be the cladding portion, is formed, the polymerizable composition for forming the outer core layer is charged in the hollow tube, allowed to polymerize while rotating the hollow tube, to thereby form the outer core layer on the inner wall of the hollow tube. It is also possible to charge a polymer for forming the outer core layer in the hollow tube, allowed to melt under heating while rotating the hollow tube so as to melt the polymer, to thereby form the outer core layer on the inner wall of the hollow tube.

Specific examples of the polymerizable monomers available for forming the outer core layer are similar to those described later in relation to the core portion.

The outer core layer is provided mainly for producing the core portion, may have a least necessary thickness so as to facilitate the block polymerization of the core portion, and may exist simply as the core portion after being united with the inner core portion having a certain refractive index with progress of the block polymerization, rather than existing as an independent layer. A thickness of only as small as 1 mm or more will therefore be necessary for the outer core layer provided in advance of the formation of the core portion, where the upper limit thereof is selectable depending on the target size of the preform, because the thickness can be increased to a degree as far as a space sufficient for producing a desired index gradation can be accomplished therein is secured.

For the case where the index gradation of the core portion is typically created by the interfacial gel polymerization process, the outer diameter $D_2$ of the outer core layer is preferably adjusted so as to satisfy the relation of $D_2 \text{ (mm)} \leqq 100$, and more preferably satisfy the relation of $10 \leqq D_2 \text{ (mm)} \leqq 50$ in view of precisely control the index gradation and polymerization speed of the matrix polymer. The thickness $t_2$ of the outer core layer preferably satisfies the relation of $0.1 \leqq t_2 \text{ (mm)} \leqq 20$. The present invention is, however, by no means limited to the above-described ranges.

Next in the second step, the precursory region of the core portion is formed by polymerizing the polymerizable composition within the hollow portion of the hollow tube fabricated in the first step.

The core portion is fabricated by polymerizing the polymerizable composition comprising a polymerizable monomer, a polymerization initiator and a refractive index adjustor. Besides the above-described ingredients, the composition may also contain a chain transfer agent and other additives. Although these materials are not specifically limited so far as the resultant polymer is transparent to the light to be transmitted, it is preferable to use the materials less causative of transmission loss of the light signals to be transmitted. The individual materials will be described below.

(Polymerizable Monomer)

The polymerizable monomer used as a source material for the core portion is preferably selected so as to readily proceed block polymerization. Examples of the source material having a large transmissivity of light and being readily polymerizable by block polymerization include (meth)acrylic esters (fluorine-free (meth) acrylic esters (a) and fluorine-containing (meth) acrylic esters (b)), styrene-base compounds (c) and vinyl esters (d), as exemplified below, and the core portion can be formed using a homopolymer of any of these monomers, a copolymer of two or more species of these monomers, or a mixture of the homopolymer and/or copolymer. Among others, a composition containing (meth)acrylic ester as the polymerizable monomer is preferably used.

As for above-described polymerizable monomers, specific examples of the (a) fluorine-free methacrylic esters and fluorine-free acrylic esters include methyl methacrylate, ethyl methacrylate, isopropyl methacrylate, *tert*-butyl methacrylate, dibenzyl methacrylate, phenyl methacrylate, cyclohexyl methacrylate, diphenylmethyl methacrylate, methacrylic ester having $C_{7-20}$ alicyclic hydrocarbon group (tricyclo[5.2.1.0$^{2,6}$]decanyl methacrylate, adamantyl methacrylate, isobornyl methacrylate, norbornyl methacrylate, etc.), methyl acrylate, ethyl acrylate, *tert*-butyl acrylate, and phenyl acrylate. Specific examples of the (b) fluorine-containing acrylic ester and fluorine-containing methacrylic ester include 2,2,2-trifluoroethyl methacrylate, 2,2,3,3-tetrafluoropropyl methacrylate, 2,2,3,3,3-pentafluoropropyl methacrylate, 1-trifluoromethyl-2,2,2-trifluoroethyl methacrylate, 2,2,3,3,4,4,5,5-octafluoropentyl methacrylate, and 2,2,3,3,4,4-hexafluorobutyl methacrylate. Specific examples of the (c) styrene-base compound include styrene, α-methylstyrene, chlorostyrene and bromostyrene. Specific examples of the (d) vinyl ester include vinyl acetate, vinyl benzoate, vinyl phenyl acetate, vinyl chloroacetate. The polymerizable monomers are, of course, not limited to these examples, and species and compositional ratios thereof are preferably combined so that any resultant polymer composed of a homopolymer or copolymer thereof will have a refractive index equivalent to or larger than that of the cladding portion.

For the case where the resultant optical component is intended for use in near-infrared applications where absorption loss ascribable to the constituent C-H bonds is anticipated, it is preferable to form the core portion using a polymer in which hydrogen atoms in the C-H bonds are substituted by deuterium atom or fluorine atom (deuterated polymethyl methacrylate (PMMA-d8), polytrifluoroethyl methacrylate (P3FMA) and polyhexafluoroisopropyl 2-fluoroacrylate (HFIP 2-FA), etc. as disclosed for example in Japanese Patent No. 3332922) in view of reducing the transmission loss of the light signal because the wavelength region causative of the transmission loss can be shifted towards the longer wavelength region.

It is preferable to thoroughly reduce any possible impurities and scattering sources from the source monomers so as not to ruin the transparency after the polymerization.

Polymers containing, as a polymerization component, an acrylate which has an alicyclic hydrocarbon group or branched hydrocarbon group in the side chain thereof is highly brittle and has only a limited stretchability in general. In contrast to this, the present invention is successful in suppressing variation in the diameter of the core portion and is less likely to cause fracture or the like during the stretching, and therefore is especially effective even when the matrix of the core portion is composed of a polymer containing, as a polymerization component, an acrylate which has an alicyclic hydrocarbon group or branched hydrocarbon group in the side chain thereof.

(Polymerization Initiator)

The polymerization initiator can appropriately be selected depending on the monomers or method of polymerization to be adopted, where examples of which include peroxide compounds such as benzoyl peroxide (BPO), *tert*-butylperoxy-2-ethyl hexanate (PBO), di-*tert*-butyl peroxide (PBD), *tert*-butylperoxyisopropyl carbonate(PBI), and n-butyl-4,4-bis(*tert*-butylperoxy)valerate (PHV); and also include azo compounds such as 2,2'-azobis(isobutyronitrile), 2,2'-azobis(2-methylbutyronitrile), 1,1'-azobis(cyclohexane-1-carbonitrile), 2,2'-azobis(2-methylpropane), 2,2'-azobis(2-methylbutane), 2,2'-azobis(2-methylpentane), 2,2'-azobis(2,3-dimethylbutane), 2,2'-azobis(2-methylhexane), 2,2'-azobis(2,4-dimethylpentane), 2,2'-azobis(2,3,3-trimethylbutane), 2,2'-azobis(2,4,4-trimethylpentane), 3,3'-azobis(3-methylpentane), 3,3'-azobis(3-methylhexane), 3,3'-azobis(3,4-dimethylpentane), 3,3'-azobis(3-ethylpentane), dimethyl-2,2'-azobis(2-methyl propionate), diethyl-2,2'-azobis(2-methyl propionate), and di-*tert*-butyl-2,2'-azobis(2-methyl propionate). The polymerization initiators are, of course, not limited to the above-described examples, and two or more species of them may be used in combination.

(Chain Transfer Agent)

The polymerizable composition for forming the core portion preferably contains a chain transfer agent. The chain transfer agent is used mainly in order to adjust the molecular weight of the polymer. For the case where both of the polymerizable compositions for forming the core portion and the cladding portion respectively contain a chain transfer agent, polymerization speed and degree of polymerization during the polymerization of the polymerizable monomer can be controlled by the chain transfer agents, and thereby the molecular weight of the resultant polymer can be adjusted to a desired value. For an exemplary case where the obtained preform is stretched to fabricate an optical fiber, adjustment of the molecular weight is successful in adjusting mechanical characteristics of the optical fiber during the stretching within a desired range, and this contributes to enhancement of the productivity.

Species and amount of addition of the chain transfer agent can appropriately be selected depending on the polymerizable monomer used in combination therewith. Chain transfer constants of the chain transfer agent with respect to the individual monomers can be found in Polymer Handbook 3rd Edition, (coedited by J.Brandrup and E.H. Immergut, published by John Wiley & Son). It is also possible to experimentally determine the chain transfer constant referring to "Kobunshi Gosei no Jikken-Ho (Experimental Methods in Polymer Syntheses)", written by Takayuki Otsu and Masaetsu Kinoshita, published by Kagakudojin Publishing Company Inc., 1972).

Preferable examples of the chain transfer agent include alkyl mercaptans (*n*-butyl mercaptan, *n*-pentyl mercaptan, *n*-octyl mercaptan, *n*-lauryl mercaptan, *tert*-dodecyl mercaptan, etc.) and thiophenols (thiophenol, *m*-bromothiophenol, *p*-bromothiophenol, *m*-toluenethiol, *p*-toluenethiol, etc.). In particular, use of alkyl mercaptans such as *n*-octyl mercaptan, n-lauryl mercaptan or *tert*-dodecyl mercaptan is preferable. It is also allowable to use a chain transfer agent in which a hydrogen atom in the C-H bond is substituted by a deuterium atom or a fluorine atom. It is also allowable to use two or more chain transfer agent in combination.

(Refractive Index Adjusting Agent)

In the present invention, the polymerizable composition for forming the core portion preferably contains a refractive index adjusting agent. By creating a concentration profile of the refractive index adjusting agent, a graded-index core portion can readily be fabricated based on the concentration profile. It is also possible, even without using the refractive index adjusting agent, to introduce a graded-index structure by using two or more species of the polymerizable monomers, and thereby creating a ratio of copolymerization within the core portion. It is, however, preferable to use the refractive index adjusting agent for its simplicity in the manufacture, as compared with the control of the compositional ratio of copolymerization.

The refractive index adjusting agent is also referred to as a dopant, and is a compound having a refractive index different from that of the polymerizable monomer used in combination therewith. Difference in the refractive indices is preferably 0.005 or more. The dopant has a function of increasing the refractive index of the polymer. Dopants available herein can arbitrarily be selected from those capable of yielding, in comparison with the resultant polymer obtained by synthesizing the monomer, a difference in the solubility parameter of within 7 (cal/cm$^3$)$^{1/2}$ as disclosed in Japanese Patent 3332922 and in Japanese Laid-Open Patent Publication No. 5-173026, capable of yielding a difference in the refractive index of 0.001 or larger, capable of varying the refractive index of the resultant polymer as compared with the non-doped polymer, capable of coexisting with the polymer in a stable manner, and capable of existing under polymerization conditions (conditions related to heating, pressurizing and so forth) of the polymerizable monomers described in the above as the source materials.

The dopant may be a polymerizable compound, where such dopant is preferably selected from those capable of increasing the refractive index of the resultant copolymer containing the dopant as a copolymerized component, as compared with the refractive index of the polymer not containing the dopant. Available dopant is therefore such as having the above-described properties, capable of coexisting with the polymer in a stable manner, and capable of existing under polymerization conditions (conditions related to heating, pressurizing and so forth) of the polymerizable monomers described in the above as the source materials. In the present invention, it is preferable to add the dopant to the polymerizable composition for forming the core portion, and to control direction of the polymerization based on the interfacial gel polymerization process in the process of forming the core portion, so as to create the gradient in the concentration of the refractive index adjusting agent, to thereby attain the refractive index gradation profile of the core portion based on the concentration distribution of the refractive index adjusting agent (the core portion having the index gradation is referred to as "graded-index core portion", hereinafter). By forming the graded-index core portion, the optical component can be completed as a graded-index plastic optical component having a wide transmission range.

Examples of the dopant include benzyl benzoate (BEN), diphenyl sulfide (DPS), triphenyl phosphate (TPP), *n*-butyl benzyl phthalate (BBP), diphenyl phthalate (DPP), biphenyl (DP), diphenyl methane (DPM), tricresyl phosphate and diphenylsulfoxide (DPSO), and among others, BEN, DPS, TPP and DPSO are particularly preferable. The dopant may also be a polymerizable compound such as tribromophenyl methacrylate, and this may be advantageous in raising the heat resistance, although this makes it more difficult to control various characteristics (especially optical characteristics) because the polymerizable dopant is copolymerized with other polymerizable monomer in the formation of the matrix. The refractive index of the plastic optical fiber can be varied to obtain any desired values by adjusting the concentration and distribution of the refractive index adjusting agent in the core portion. The amount of addition herein can appropriately be selected considering the applications and the source materials of the core portion to be combined therewith.

The refractive index adjusting agent is not limited to those listed in the above, and is not precluded from using a plural species thereof in combination in order to attain a desired refractive index.

The amount of addition of the refractive index adjusting agent may vary depending on a desired degree of increase in the refractive index or in relation with the polymer matrix, and a preferable range generally resides in a range from 1 to 30% by mass of the polymerizable composition, more preferably from 3 to 25% by mass, and still more preferably from 5 to 20% by mass.

(Other Additives)

The core portion, outer core portion and cladding portion can be added with other additives so far as they do not degrade the light transmission performance. For example, it is allowable to add a stabilizer in order to improve the weatherability and durability of the outer core portion and the core portion. It is also allowable to add a compound having an induced-emission function for amplifying light signals, for the purpose of enhancing the light transmission performance. Addition of this sort of compound is successful in amplifying attenuated light signal with the aid of excitation light and in elongating the transmission distance, so that this is typically applicable to a fiber amplifier as one component of a light transmission link. Also these additives can be added in the source monomers, so as to be contained in the core portion, outer core portion or cladding portion after the polymerization.

In the second step, it is preferable to form the core portion by polymerizing the polymerizable monomer in the polymerizable composition filled in the hollow tube by the so-called interfacial gel polymerization process. In the interfacial gel polymerization process, the polymerization of the polymerizable monomers proceed from the inner wall of the hollow tube towards the center thereof in the radial direction on the transverse sectional plane. For the case where two or more species of polymerizable monomers are used, a monomer having a larger affinity to the polymer composing the hollow tube has a larger tendency of being concentrated and polymerized on the surface of the inner wall of the hollow tube, and thereby a polymer having a larger content of such monomer is formed. Ratio of content of the high-affinity monomer decreases towards the center of the resultant polymer, and ratio of contents of other monomers increase instead. In this way, a gradation in the monomer composition is created within a region composing the core portion, and this successfully introduces a gradation in the refractive index. When the polymerizable monomer is polymerized after being added with the refractive index adjusting agent, the core-forming liquid dissolves the inner wall of the hollow tube so as to allow the polymer composing the inner wall to swell and to form a gel, within which the polymerization proceeds, as described in Japanese Patent No. 3332922. In this process, a monomer having a larger affinity to the polymer composing the hollow tube has a larger tendency of being concentrated and polymerized on the surface of the inner wall of the hollow tube, and thereby a polymer having a lower concentration of the refractive index adjusting agent is formed on the outer circumferential portions. The obtained polymer will therefore have a larger ratio of content of the refractive index adjusting agent at the position more closer to the center. In this way, the region as a precursor of the core portion will have a concentration gradation of the refractive index adjusting agent, and will consequently have a refractive index profile.

In the present invention, the interfacial gel polymerization proceeds on the smooth surface of the inner wall of the hollow tube, having an arithmetic mean roughness of only as small as 0.4 μm, and this successfully reduces variation in the diameter of the core portion. This consequently makes it possible to produce the index gradation in a constant and stable manner, and contributes to improvement in the productivity and performance of the plastic optical components.

As described in the above, the region as a precursor of the core portion is given with an index gradation in the second step, where the portions differ in the refractive index also differ in the thermal behavior. Any polymerization proceeded at a constant temperature will therefore vary response property of the volume shrinkage which generates with progress of the polymerization reaction in the portion as a precursor of the core portion, to thereby yield the preform having bubbles or microvoids formed therein, and therefore stretching under heating of such preform may result in generation of a large number of bubbles. Too low polymerization temperature will result in a lowered polymerization efficiency, a seriously-ruined productivity, a lowered transmissivity due to incomplete polymerization, and a ruined light transmission performance of the resultant optical components. On the contrary, too high initial polymerization temperature will considerably raise the polymerization speed, will therefore be unsuccessful in ensuring responsive relaxation of the shrinkage of the region as a precursor of the core portion, and will result in a large tendency of the bubble generation.

In the second step, relaxation response to the volume shrinkage in the initial polymerization is improved by keeping the initial polymerization temperature at $T_1°C$ which satisfies the relation below, so as to reduce the polymerization speed.

In the relation below, $T_b$ represents the boiling point (°C) of the polymerizable monomer, and $T_g$ represents the glass transition point (°C) of the polymerizable monomer, allowing the same to be applied hereinafter:

$$T_b - 10 \leqq T_1 \leqq T_g.$$

In the second step, the polymerization is proceeded while keeping the temperature at $T_1°C$ for a predetermined duration of time, and is further continued thereafter while raising the temperature to $T_2°C$ which satisfies the relation below:

$$T_g \leqq T_2 \leqq (T_g + 40)$$

$$T_1 < T_2$$

The polymerization completed after raising the temperature to as high as $T_2°C$ is successful in preventing the light transmissivity from lowering, and in obtaining an optical component having a desirable light transmission property. This is also advantageous in raising the transparency of the preform while suppressing adverse influence of thermal degradation or depolymerization of the preform, and by eliminating variation in the inherent polymer density. $T_2$ is preferably adjusted within a range from $T_g°C$ to $(T_g + 30)°C$, and more preferably to $(T_g + 10)$ °C or around. $T_2$ lower than $T_g$ will be unsuccessful in obtaining the effect, and exceeding $(T_g + 40)$ will tend to result in lowering in the transparency of the preform due to thermal degradation or depolymerization. This is also disadvantageous especially for the case where the graded-index core portion is desired, because this is causative of destruction of the gradation in the refractive index, and of serious damage on the performance of the optical component.

The polymerization at temperature $T_2$°C is preferably proceeded completely to the end so as not to leave an unreacted portion of the polymerization initiator. Complete reaction of the polymerization initiator is desired because any residue of the polymerization initiator which remains unreacted within the preform may decompose and generate bubbles under heating during processing of the preform, especially in the melting/stretching process. A desirable range of the duration of time over which the temperature is kept at $T_2$°C may vary depending on species of the polymerization initiator to be adopted, and preferably selected as being not shorter than the half-life of the polymerization initiator at temperature $T_2$°C.

In the present embodiment, it is also preferable, from similar point of view, to use a compound having a 10 hour half-life temperature of not lower than $(T_b-20)$°C as the polymerization initiator, where $T_b$ expresses the boiling point of the polymerizable monomer, and to proceed the polymerization in the duration of time as long as 10% or more (preferably 25% or more) of the half-life of the polymerization initiator at $T_1$°C which satisfies the above-described relation. Use of a compound having a 10 hour half-life temperature of not lower than $(T_b-20)$ °C as the polymerization initiator, and polymerization proceeded at the initial polymerization temperature $T_1$°C are successful in reducing the initial polymerization speed. The polymerization proceeded at the above-described temperature for a duration of time as long as 10% or more of the half-life of the polymerization initiator is successful in achieving a more quick response of the volume shrinkage to the pressure in the initial polymerization. In other words, adoption of the above-described conditions makes it possible to suppress the initial polymerization speed, and to thereby improve the volume shrinkage response in the initial polymerization. This successfully reduces inclusion of the bubbles in the preform due to the volume shrinkage, and raises the productivity. It is to be noted now that the 10 hour half-life temperature of the polymerization initiator means a temperature causative of decomposition of the polymerization initiator so as to halve the quantity thereof within 10 hours.

When the polymerization is proceeded using the polymerization initiator which satisfies the above-described conditions at the initial polymerization temperature $T_1$°C for the duration of time as long as 10% or more of the 10 hour half-life of the polymerization initiator, it is not so undesirable to keep the temperature at $T_1$°C until the polymerization is completed, but it is more preferable to finish the polymerization while raising the temperature higher than $T_1$°C in view of obtaining the optical component having a larger transparency. The raised temperature is preferably $T_2$°C which satisfies the above-described relation, more preferable temperature range is also as described in the above, and a preferable range for the duration of time over which temperature $T_2$°C should be kept is again also as described in the above.

For the case where methyl methacrylate (MMA) having a boiling point of $T_b$°C is used as the polymerizable monomer in the second step, PBD and PHV conform to the polymerization initiator having a 10 hour half-life of $(T_b-20)$ °C or higher out of those listed in the above. In an exemplary case where MMA and PBD are used as the polymerizable monomer and as the polymerization initiator, respectively, the initial polymerization temperature is preferably kept within a range from 100 to 110°C for 48 to 72 hours, and thereafter the temperature is elevated to 120 to 140°C so as to allow the polymerization to proceed for 24 to 48 hours, and in another exemplary case where PHV is used as the polymerization initiator, the initial polymerization temperature is preferably kept within a range from 100 to 110°C for 4 to 24 hours, and thereafter the temperature is elevated to 120 to 140°C so as to allow the polymerization to proceed for 24 to 48 hours. The temperature elevation can be effected either in a step-wise manner or in a continuous manner, provided that it is completed within a short period of time.

In the second step, the polymerization may be proceeded under increased pressure as disclosed in the Japanese Laid-Open Patent Publication No. 9-269424, or under reduced pressure as disclosed in the Japanese Patent No. 3332922, and it is further allowable to vary the pressure depending on situations in the polymerization process. These operations are successful in raising the polymerization efficiency at $T_1$°C and $T_2$°C, which satisfy the above-described relations and are close to the boiling point of the polymerizable monomer. The polymerization under a pressurized status (polymerization proceeded under pressurized conditions is referred to as "pressurized polymerization", hereinafter) is preferably proceeded while inserting and keeping the hollow tube, having the monomer injected therein, in the hollow portion of the jig. The jig is shaped so as to have the hollow portion in which the hollow tube can be inserted, and the hollow portion preferably has a geometry similar to that of the hollow tube. In other words, also the hollow portion preferably has a cylindrical form. The jig is responsible for suppressing deformation of the hollow tube during the pressurized polymerization, and for supporting the precursory region of the core portion so as to relax the shrinkage thereof. It is therefore preferable that the hollow portion of the jig has a diameter larger than the outer diameter of the hollow tube, and supports the hollow tube in a non-adhered form. The hollow portion of the jig preferably has a diameter larger only by 0.1% to 40% than the outer diameter of the hollow tube, and more preferably by 10% to 20%.

The hollow tube can be disposed in a polymerization reactor while being inserted in the hollow portion of the jig. In the polymerization reactor, the hollow tube is preferably disposed so as to align the height-wise direction of the cylindrical body thereof vertically. The polymerization reactor, having the hollow tube disposed therein so as to be supported by the jig, can be pressurized. The pressurization of the polymerization reactor is preferably effected using an inert gas such as nitrogen, to thereby allow pressurized polymerization to proceed under an inert gas atmosphere. Preferable range of the pressure during the polymerization is generally from 0.05 to 1.0 MPa or around, which may differ depending on the monomer to be adopted.

Upon completion of the second step, cooling operation of the preform at a constant cooling speed under controlled pressure is successful in suppressing the bubbles which possibly generate after the polymerization.

It is preferable, in view of pressure response of the core portion, to pressurize the polymerization reactor using an inert gas such as nitrogen, and to allow the pressurized polymerization to proceed under the inert gas atmosphere. It is however essentially impossible to completely degas the preform, and an abrupt shrinkage of the polymer typically in the cooling process is inevitably causative of condensation of the gas into the voids to thereby form nuclei of the bubbles, which may result in the bubbles.

In order to avoid this problem, it is preferable to adjust the cooling speed in the cooling process to 0.001 to 3°C/min or around, and more preferably 0.01 to 1°C/min or around. The cooling process may be divided into two or more steps in consideration of volume shrinkage of the polymer in the process of approaching $T_g$ of the polymer, especially in the process of approaching $T_g$ of the core portion. In this case, it is preferable to increase the cooling speed immediately after the start of the polymerization, and then to gradually moderate the speed.

The preform obtained by the above-descried operations has a uniform gradation profile of the refractive index and a sufficient light transmissivity, where the bubbles or micro-voids are desirably suppressed. A desirable level of smoothness is attained on the interface between the outer core portion and the core portion, on which light is reflected so as to be confined within the fiber.

The obtained preform can be processed into various geometry so as to fabricate various plastic optical components. For example, the preform is stretched under fusion so as to yield the plastic optical fiber.

In the present invention, the preform *per se* has a desirable smoothness on the interface between the outer core portion and the core portion in which light is confined based on reflection, so that stretching of such preform can further reduce the roughness of the interface between the core and clad, and thereby further improve the smoothness. For the case where the portion of the preform, which is a precursor of the core portion, has an index gradation, this is successful in manufacturing the plastic optical fiber having a uniform light transmission performance with a high productivity and an advanced stability.

Stretching is preferably carried out so that the preform is heated and melted by allowing it to pass through a heating furnace (typically a cylindrical heating furnace), and then drawn in succession. The heating temperature may properly be determined depending on materials for composing the preform, where a generally preferable range is from 180 to 250°C. Stretching conditions (stretching temperature, etc.) may appropriately be determined considering the diameter of the resultant preform, a target diameter of the plastic optical fiber and materials adopted herein. In particular for the graded-index optical fiber, having a refractive index varies from the center towards the circumference as viewed on the transverse section, it is essential to uniformly heat and draw the fiber so as not to destruct the index profile. It is therefore desirable to use a cylindrical heating furnace capable of uniformly heating the preform in the sectional direction. It is also desirable for the heating furnace to have a temperature distribution in the direction of axis of stretching. Narrower melted portion is more advantageous in preventing the index profile to be distorted, and in raising the yield ratio. More specifically, it is preferable to carry out preheating and gradual cooling before and after the melted region so as to narrow the melted portion. It is still more preferable to use a heat source such as laser, which is capable of supplying a high output energy even for a narrow region.

The stretching is preferably carried out using a fiber-drawing apparatus equipped with a core aligning mechanism for keeping the center position constant, in view of keeping the linearity and roundness of the fiber. Proper selection of the stretching conditions makes it possible to control the orientation of the polymer composing the fiber, and also makes it possible to control mechanical characteristics such as bending performance of heat shrinkage of the fiber obtained after drawing.

The tension during the fiber drawing can be adjusted to 10 g or larger so as to orient the molten plastic as described in Japanese Laid-Open Patent Publication No. 7-234322, and is preferably adjusted to 100 g or smaller as not to leave any distortion after stretching under fusion as described in Japanese Laid-Open Patent Publication No. 7-234324. It is still also preferable to adopt a method in which a preliminary heating process is provided before the stretching, as described in Japanese Laid-Open Patent Publication No. 8-106015.

In the present invention, the stretching factor is preferably selected within a range from 400 times to 20,000 times. The stretching factor of less than 400 times will result in only an insufficient effect of smoothening of the interface between the core and clad after stretching. On the other hand, the stretching factor exceeding 20,000 times will make it more likely to cause breakage during the stretching and to lower the productivity, where too strong orientation of the resultant fiber will considerably shrink in the longitudinal direction when the fiber is exposed to heat, to thereby largely degrade performances of the optical fiber. Preferable range of the stretching factor is from 500 times to 15,000 times, and more preferably from 600 times to 10,000 times. It is to be noted that the stretching factor refers to a value calculated based on a ratio of sectional area of the preform and the resultant fiber.

The fiber obtained by the above-described method can be improved in the bending performance or lateral pressure characteristics if the breakage elongation and hardness of the resultant element fiber are specified as described in the Japanese Laid-Open Patent Publication No. 7-244220.

Thus-manufactured plastic optical fiber may be subjected to various applications without any modification, or in modified styles for the purpose of protection or reinforcement, where the styles include the one such as having a cover layer on the outer surface, having a fiber layer, and/or having a form of bundle of a plurality of fibers.

Known processes for the covering, or methods of forming the cover layer around the fiber include such as extruding and forming a resin for coverage around the element fiber, such as polymerizing the monomer coated around an optical component, such as wrapping a sheet, and such as passing an optical component into an extrusion-formed hollow tube.

In an exemplary case where the cover layer is formed around the element fiber by extrusion forming, a possible process is such as disposing the element fiber through opposed dies together forming a through-hole through which the element fiber can be passed, filling a molten resin for coverage in the space between the opposed dies, and conveying the element fiber between the dies. The cover layer is preferably not fused with the element fiber in view of preventing the inner fiber from stress under bending. The element fiber may thermally be damaged during the covering process while being exposed to the molten resin. It is therefore preferable to set the conveyance speed of the element fiber so as to minimize the thermal damage, and to select the resin for forming the cover layer which can be fused at low temperatures. The thickness of the cover layer can be adjusted considering the fusing temperature of the resin for the coverage, conveyance speed of the element fiber, and cooling speed of the cover layer.

The plastic optical fiber obtained by the method of the present invention is applicable to a system which transmits light signal through an optical fiber cable, where the system is composed of various light-emitting devices, light-receiving devices, other kinds of optical fibers, optical bus, optical star coupler, light signal processor, optical connectors for connection and so forth. Technologies related to these components may be any of those publicly known, and examples of which can be found in "Purasuchikku Oputikaru Faiba no Kiso to Jissai (Basics and Practice of Plastic Optical Fiber) " published by NTS Inc., or can be understood making reference to optical buses disclosed in Japanese Laid-Open Patent Publication Nos. 10-123350, 2002-90571 and 2001-290055; optical branch/couplers disclosed in Japanese Laid-Open Patent Publication Nos. 2001-74971, 2000-329962, 2001-74966, 2001-74968, 2001-318263 and 2001-311840; optical star coupler disclosed in Japanese Laid-Open Patent Publication No. 2000-241655; light signal transmitting devices and light data bus systems disclosed in Japanese Laid-Open Patent Publication Nos. 2002-62457, 2002-101044 and 2001-305395; light signal processor disclosed in Japanese Laid-Open Patent Publication No. 2002-23011; light signal cross-connect system disclosed in Japanese Laid-Open Patent Publication No. 2001-86537; light transmission system disclosed in Japanese Laid-Open Patent Publication No. 2002-26815; and multi-function systems disclosed in Japanese Laid-Open Patent Publication No. 2001-339554 and 2001-339555.

[Examples]

The present invention will further be explained referring to specific examples. It is therefore to be understood that the scope of the present invention is by no means limited to the specific examples explained below.

[Example 1]

(Preparation of Source Material for Hollow Tube)

A monomer solution containing two species of monomers (isobornyl methacrylate (IBXMA) and methyl methacrylate (MMA) (polymerization inhibitor and moisture thoroughly eliminated from the both, IBXMA/MMA=2/8 by mass), di-t-butyl peroxide as a polymerization initiator in an amount of 0.02% by mass of the monomer solution, and n-lauryl mercaptan as a chain transfer agent in an amount of 0.05% by mass of the monomer solution were mixed, the mixed solution was filtered through a poly (tetrafluoroethylene) membrane filter having a pore size of 0.2 $\mu$m, sent to the reactor kept at 100°C under nitrogen flow, and allowed to preliminarily polymerize for 24 hours. The mixture was then transferred into a screw conveyer kept at 130°C, allowed to complete the polymerization within 48 hours, to thereby obtain a polymer having a weight average molecular weight of 100,000.

(Fabrication of Hollow Tube)

The clad tube 61 was fabricated using the manufacturing line 50 shown in FIG. 2. A proper amount of the aforementioned methyl methacrylate/isobornyl methacrylate copolymer pellet was charged into the hopper 56, heated and melted by the single screw extrusion machine having a bent, and was then extruded towards the pushing die 52. The temperature of the resin was controlled within a range from 190°C to 195°C, and the apparent viscosity of the polymer at the exit of the pushing die 52 was controlled within a range from 30,000 to 50,000 Pa·s. The molten resin was fed to the molding die 53 so as to keep the extrusion speed S constantly at 0.6 m/min to form a soft hollow tube 60. Next, using the molding die 53 shown in FIG. 3, the hollow tube 61 having an outer diameter of 20 mm and a thickness (of clad) of 2 mm was fabricated from the soft hollow tube 60. The pressure inside the reduced-pressure chamber 71 herein was kept to 30 kPa. The distance $L_1$ between the exit of the pushing die 52 and the plane opposite to the attachment plane of the throat 58 was set to 15 mm, the resultant hollow tube 61 was sent to the cooling unit 54 of 2.5 m long where the cooling water 81 of 15°C is sprinkled, and the tube was cooled there to obtain a cylindrical hollow tube (referred to as hollow tube, hereinafter). The obtained hollow tube was found to have a maximum surface roughness of the inner wall of 0.19 $\mu$m, and a roundness of 99.5%.

(Manufacture of Preform and Fiber)

An MMA/IBXMA (water content reduced to as low as 100 ppm or below) solution having a mixing ratio of both components of 8:2 by mass so as to assimilate the copolymer composition of the hollow tube was prepared, the solution was then dehydrated overnight over Molecular Sieve so as to remove moisture and any possible polymerization initiators, further purified by allowing the solution to pass through an alumina column so as to remove the residual polymerization initiators, and was added with diphenyl sulfide as a refractive index adjusting agent in an amount of 12.5% by mass with respect to MMA. The obtained solution was then filtered through a poly (tetrafluoroethylene) membrane filter having a pore size of 0.2 $\mu$m, so that the filtrate is directly poured into the hollow portion of the hollow tube composed of the MMA/IBXMA copolymer. The filtrate is added with di-t-butyl peroxide as a polymerization initiator (10 hour half-life temperature=123.7°C) in an amount of 0.016% by mass with respect to MMA, and with dodecyl mercaptan as a chain transfer agent in an amount of 0.27% by mass with respect to MMA. The PMMA hollow tube filled with MMA and so forth was subjected to ultrasonic degassing under reduced pressure for 5 minutes, inserted in a glass tube having a diameter larger by 9% than the outer diameter of the PMMA hollow tube, and the glass tube was allowed to stand still and vertically in a pressurized polymerization reactor. The inner atmosphere of the pressurized polymerization reactor was displaced with nitrogen, pressurized to as high as 0.1 MPa, and the polymerization under heating was carried out for 48 hours at 100°C, which is a temperature selected on the basis of the boiling point $T_b$ of MMA (100°C) which is lower than that of IBXMA, and selected so as to be not lower than ($T_b$-10) and not higher than the glass transition point $T_g$ of MMA/IBXMA (115°C). For reference, the boiling point of IBXMA is 127°C /15mmHg. The pressure was then raised to 0.8 MPa, and the polymerization under heating and annealing were further carried out for 24 hours at 120°C, which is a temperature not lower than $T_g$ of PMMA and not higher than ($T_g$+40). After completion of the polymerization, the product was cooled at a cooling speed of 0.01°C/min to as low as 80°C, which is not higher than $T_g$ of the core portion of the preform, while keeping the pressure at 0.1 MPa, to thereby obtain a preform. It is to be noted that the half-life of di-t-butyl peroxide is 180 hours at 100°C, and 15 hours at 120°C. The preform obtained by this process was found to contain no bubble ascribable to volume shrinkage possibly occurs when the polymerization completes.

The preform was then stretched to 1,600 times in a stretching furnace having a preheating section conditioned at 160°C and a melting/stretching section conditioned at 230°C, at a drawing speed of 3.6 m/min, to thereby stably obtain a plastic optical fiber of 500 $\mu$m in diameter and 1,000 m in length. The fiber was obtained in a substantial yield of 75%, and was found to have a variation in the diameter of $\pm$15 $\mu$m over the entire length, and a roundness of 99.3%. The fiber was also found to have a transmission loss measured at 650 nm of 170 dB/km, and a maximum band characteristic of 1.2 GHz/ 100 m.

[Example 2]

(Fabrication of Dual Hollow Tube)

Of the conditions described in Example 1, the resin to be adopted was replaced with poly(vinylidene fluoride) (PVDF) (KF-#850, product of Kureha Chemical Industry Co., Ltd., m.p.= 178°C), the resin temperature during the extrusion was modified to be adjusted to 185°C to 187°C, and the apparent viscosity of the polymer at the exit of the pushing die was modified to be controlled within a range from 3,000 to 4,000 Pa·s. While leaving the other conditions unchanged from those described in Example 1, a PVDF hollow tube of 20 mm in outer diameter and 0.5 mm in thickness (of the clad) was fabricated.

Thus-fabricated PVDF hollow tube was inserted in a hollow tube having an inner diameter just in size for accommodating the PVDF hollow tube, and into the hollow portion of the PVDF hollow tube, the MMA/IBXMA mixed solution purified by the same method as described in Example 1, added with dimethyl-2,2'-azobis butyrate as a polymerization initiator in an amount of 0.05% by mass with respect to the monomer, and dodecyl mercaptan as a chain transfer agent in an amount of 0.5% by mass with respect to the monomer, was poured up to 75% of the capacity of the hollow tube. The solution was then allowed to polymerize under heating for 1 hour while rotating the hollow tube at 60°C and 3,000 rpm, further allowed to polymerize under heating and rotation for 4 hours at a temperature elevated up to 70°C, and then annealed at 90°C for 10 hours, to thereby obtain a cylindrical dual cladding tube (hollow tube) having a PVDF outer tube of 0.5 mm thick, and an inner tube of 2 mm thick composed of the MMA/IBXMA copolymer and formed on the inner surface of the outer tube. The obtained hollow tube was found to have a maximum surface roughness of the inner wall thereof of 0.21 $\mu$m, and a roundness of 99.4%.

The preform was thereafter fabricated similarly to as described in Example 1, and then stretched under heating to thereby obtain an optical fiber. The fiber was found to have a transmission loss measured at 650 nm of 178 dB/km, and a maximum band characteristic of 1.3 GHz/100 m.

[Example 3]

(Fabrication of Double-Layered Hollow Tube)

A melt extrusion machine (melt extrusion molding machine) applicable to the second type was modified so that the machine can produce a dual hollow tube. The process adopts the PVDF resin same as that used in Example 2 for the outer tube of the dual hollow tube, and the MMA/IBXMA copolymer prepared as a source material for composing the hollow tube in Example 1 for the inner tube. After the heat processes carried out similarly to as described in Example 1, a cylindrical hollow dual cladding tube having a PVDF outer tube of 0.7 mm thick, and an inner tube of 2.2 mm thick composed of the MMA/IBXMA copolymer and formed on the inner surface of the outer tube was obtained.

The preform was thereafter fabricated similarly to as described in Example 1, and then stretched under heating to thereby obtain an optical fiber. The fiber was found to have a transmission loss measured at 650 nm of 188 dB/km, and a maximum band characteristic of 1.3 GHz/100 m.

[Example 4]

The preform was stretched similarly to as described in Example 1, except that a carbon dioxide gas laser generator with a maximum output of 60 W was used as a heating source for stretching under melting, and that the preform was stretched while being rotated at a speed of 30 rpm so as to equalize the heat energy to be irradiated, using a rotating mechanism attached to the core aligning mechanism.

The obtained optical fiber was similar to that obtained in Example 1.

[Comparative Example 1]

The optical fiber was obtained similarly to as described in Example 1, except that the inner wall of the obtained hollow tube was intentionally roughened so as to have a maximum surface roughness of 0.9 $\mu$m. The transmission loss at 650 nm of the fiber was found to be 530 dB/km, and the band characteristic was a maximum of 1.0 GHz/100 m, showing degraded performance as compared with those in Example 1.

[Comparative Example 2]

A trial under heating/stretching conditions modified from those in Example 1, in which the preform is drawn under a faster drawing speed and in a stretching factor of 20,000 times or larger to thereby obtain a 50-$\mu$m-diameter fiber, resulted in failure at a length of approximately 120 m due to breakage. The obtained fiber was found to have variation in the diameter as large as 60 $\mu$m, and to show a distortion with a roundness only as small as 79%, which proved that the fiber was inappropriate for the practical use.

[Comparative Example 3]

A hollow tube having a roughness of the inner wall surface of 0.6 $\mu$m was obtained similarly to as described in Example 1, except that the extrusion speed of the screw extrusion machine in the process step of fabricating the hollow tube was pulsated. An optical fiber produced from the hollow tube after the same procedures as described in Example 1 was found to be far from good, even inferior to Comparative Example 1.

[Comparative Example 4]

A hollow tube having a roughness of the inner wall surface of 0.8 $\mu$m was obtained similarly to as described in Example 2, except that the axis of rotation of the rotating mechanism for the hollow tube in the process step of forming the inner tube of the hollow tube was decentered. An optical fiber produced from the hollow tube after the same procedures as described in Example, 2 was found to be far from good, even inferior to Comparative Example 1.

Industrial Applicability

The present invention is successful in providing a method of stably manufacturing a preform for producing a plastic optical component, having a uniform index gradation profile in the longitudinal direction, and having less variation in the diameter of the core portion. The present invention is also successful in providing a method of stably manufacturing a plastic optical fiber having a small transmission loss and a wide transmission band.

**Claims**

1. A method of manufacturing a preform for producing a plastic optical component comprising a graded-index core portion and a cladding portion in which the refractive index of the core portion continuously decreases from its center to the outer radius, and the refractive index of the cladding portion is smaller than that of the center of the core portion by 0.03 or more, comprising;

a first step of fabricating a polymer hollow tube (19) for the cladding portion in which the inner wall of the polymer hollow tube (19) has an arithmetic mean roughness of less than 0.4 μm; and a second step of polymerizing a polymerizable composition in the hollow portion of the hollow tube (19) to thereby form the core portion.

2. The method of manufacturing a preform for producing a plastic optical component of Claim 1, wherein in the first step the hollow tube is fabricated by melt extursion molding or injection molding.

3. The method of manufacturing a preform for producing a plastic optical component of Claim 1 or 2, wherein the hollow tube is composed of a homopolymer or copolymer of a fluorine-containing monomer.

4. The method of manufacturing a preform for producing a plastic optical component of any one of Claims 1 to 3, further comprising, before charging the polymerizable composition to the hollow tube, a step of forming an outer core layer on the inner wall of the hollow tube, in which the outer core layer is composed of a polymer having the same composition as the matrix of the core portion.

5. The method of manufacturing a preform for producing a plastic optical component of any one of Claims 1 to 4, wherein the hollow tube is composed of a fluorine-containing resin obtained by polymerizing a polymerizable monomer composition containing 10% by mass or more of vinylidene fluoride.

6. The method of manufacturing a preform for producing a plastic optical component of any one of Claims 1 to 5, wherein the core portion has a matrix composed of an acrylic resin having an alicyclic hydrocarbon group as a side chain.

**Patentansprüche**

1. Verfahren zum Fertigen eines Vorformlings zur Herstellung eines optischen Kunststoffbauteils, welches einen Kernteil mit Gradientenindex und einen Mantelteil aufweist, bei dem der Brechungsindex des Kernteils ausgehend von dessen Mitte hin zum Außenradius kontinuierlich abnimmt und der Brechungsindex des Mantelteils um 0,03 oder mehr kleiner ist als der Brechungsindex an der Mitte des Kernteils, umfassend:

einen ersten Schritt des Fertigens eines hohlen Polymerschlauchs (19) für den Mantelteil, wobei die Innenwand des hohlen Polymerschlauchs (19) eine arithmetische mittlere Rauigkeit von weniger als 0,4 μm aufweist; und einen zweiten Schritt des Polymerisierens einer polymerisierbaren Zusammensetzung in dem hohlen Teil des hohlen Schlauchs (19), um **dadurch** den Kernteil zu bilden.

2. Verfahren nach Anspruch 1, bei dem in dem ersten Schritt der hohle Schlauch hergestellt wird durch Schmelz-Extrusionsformen oder Spritzgießen.

3. Verfahren nach Anspruch 1 oder 2, bei dem der hohle Schlauch aus einem Homopolymer oder Copolymer eines fluorhaltigen Monomers zusammengesetzt ist.

4. Verfahren nach einem der Ansprüche 1 bis 3, bei dem vor dem Einbringen der polymerisierbaren Zusammensetzung in den hohlen Schlauch eine Außenkernschicht an der Innenwand des hohlen Schlauchs gebildet wird, wobei die Außenkernschicht sich zusammensetzt aus einem Polymer mit der gleichen Zusammensetzung wie der Matrix des Kernteils.

5. Verfahren nach einem der Ansprüche 1 bis 4, bei dem der hohle Schlauch aus einem fluorhaltigen Harz zusammengesetzt ist, erhalten durch Polymerisieren einer polymerisierbaren Monomer-Zusammensetzung, die 10 Massen-% oder mehr Vinylidenfluorid enthält.

6. Verfahren nach einem der Ansprüche 1 bis 5, bei dem der Kernteil eine Matrix aufweist, die sich zusammensetzt aus einem Acrylharz mit einer alizyklischen Kohlenwasserstoffgruppe als Seitenkette.

**Revendications**

1. Procédé de fabrication d'une préforme utilisée dans la production d'un composant optique en plastique comprenant une partie formant coeur à gradient d'indice et une partie formant gaine, dans lequel l'indice de réfraction de la partie formant coeur diminue de manière continue de son centre vers le rayon extérieur, et l'indice de réfraction de la partie formant gaine est inférieur à celui du centre de la partie formant coeur à raison de 0,03 ou plus, comprenant les étapes suivantes :

une première étape de fabrication d'un tube creux polymère (19) pour la partie formant gaine, dans laquelle la paroi intérieure du tube creux polymère (19) présente une rugosité de valeur moyenne inférieure à 0,4 μm, et
une seconde étape de polymérisation d'une composition polymérisable dans la partie creuse du tube creux (19), afin de former ainsi la partie formant coeur.

2. Procédé de fabrication d'une préforme utilisée dans la production d'un composant optique en plastique selon la revendication 1, dans lequel lors de la première étape, le tube creux est fabriqué par un moulage avec extrusion de matière fondue ou par un moulage à injection.

3. Procédé de fabrication d'une préforme utilisée dans la production d'un composant optique en plastique selon la revendication 1 ou 2, dans lequel le tube creux est composé d'un homopolymère ou d'un copolymère de monomère contenant du fluor.

4. Procédé de fabrication d'une préforme utilisée dans la production d'un composant optique en plastique selon l'une quelconque des revendications 1 à 3, comprenant en outre, avant de charger la composition polymérisable dans le tube creux, une étape de formation d'une couche formant coeur extérieure sur la paroi intérieure du tube creux, dans laquelle la couche formant coeur extérieure est composée d'un polymère présentant la même composition que la matrice de la partie formant coeur.

5. Procédé de fabrication d'une préforme utilisée dans la production d'un composant optique en plastique selon l'une quelconque des revendications 1 à 4, dans lequel le tube creux est composé d'une résine contenant du fluor, obtenue en polymérisant une composition de monomère polymérisable contenant 10% en masse ou plus de fluorure de vinylidène.

6. Procédé de fabrication d'une préforme utilisée dans la production d'un composant optique en plastique selon l'une quelconque des revendications 1 à 5, dans lequel la partie formant coeur a une matrice composée d'une résine acrylique présentant un groupement d'hydrocarbure alicyclique comme chaîne latérale.

F i g. 1

F i g. 2

F i g. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3332922 B
- JP 8054521 A
- JP 2000352627 A
- JP 8338914 A
- JP 62231904 A
- WO 9857204 A
- JP 8110419 A
- JP 5173026 A
- JP 9269424 A
- JP 7234322 A
- JP 7234324 A
- JP 8106015 A
- JP 7244220 A
- JP 10123350 A
- JP 2002090571 A
- JP 2001290055 A
- JP 2001074971 A
- JP 2000329962 A
- JP 2001074966 A
- JP 2001074968 A
- JP 2001318263 A
- JP 2001311840 A
- JP 2000241655 A
- JP 2002062457 A
- JP 2002101044 A
- JP 2001305395 A
- JP 2002023011 A
- JP 2001086537 A
- JP 2002026815 A
- JP 2001339554 A
- JP 2001339555 A

**Non-patent literature cited in the description**

- Polymer Handbook. John Wiley & Son
- Kobunshi Gosei no Jikken-Ho. Kagakudojin Publishing Company Inc, 1972